# EUROPÄISCHE PATENTSCHRIFT

(11) **EP 0 810 399 B1**
(45) Veröffentlichungstag und Bekanntmachung des Hinweises auf die Patenterteilung: **05.12.2001**
(21) Anmeldenummer: 97104112.4
(22) Anmeldetag: 12.03.1997
(51) Int. Cl.: F16L 37/088, F16L 37/14

(54) **Steckkupplung für Druckmittelsysteme**
Plug coupling for pressure fluid systems
Raccord emboîtable pour systèmes à fluide sous pression

(30) Priorität: 29.05.1996 DE 19621535
(43) Veröffentlichungstag der Anmeldung: 03.12.1997
(73) Patentinhaber: Armaturenfabrik Hermann Voss GmbH + Co. KG, 51688 Wipperfürth (DE)
(72) Erfinder: Berg, Manfred, 51688 Wipperfürth (DE); Hagen, Harald, 51688 Wipperfürth (DE); Kaminski, Volker, 58553 Halver (DE)
(74) Vertreter: Patentanwälte Dr. Solf & Zapf

(56) Entgegenhaltungen:
- EP-A- 0 751 331
- EP-A- 0 766 033
- FR-A- 1 503 989

## Beschreibung

Die vorliegende Erfindung betrifft eine Steckkupplung für Druckmittelsysteme, bestehend aus zwei Kupplungsteilen, und zwar einem Aufnahmeteil und einem Steckerteil, wobei das Steckerteil mit einem Steckerschaft umfangsgemäß abgedichtet in eine Aufnahmeöffnung des Aufnahmeteils einsteckbar und über eine Verriegelungseinrichtung gegen Lösen arretierbar ist, wobei die Verriegelungseinrichtung derart ausgebildet ist, daß eine teilgesteckte Vorraststellung und eine ganz gesteckte Vollraststellung gewährleistet sind, wobei in der Vorraststellung eine derart unvollständige Abdichtung vorliegt, daß im Falle einer Druckbeaufschlagung mit einem Druckmedium ein Signal, insbesondere ein akustisch wahrnehmbares Leckgeräusch, erzeugt wird, und wobei in der Vollraststellung eine vollständige, druckdichte Abdichtung vorliegt, wobei die Verriegelungseinrichtung ein in einer Ausnehmung des einen Kupplungsteils sitzendes Halteelement aufweist, welches in der Vorraststellung und in der Vollraststellung jeweils eine Rastkante des anderen Kupplungsteils rastend hintergreift.

Derartige Steckkupplungen werden beispielsweise in Kraftfahrzeug-Bremssystemen, insbesondere bei LKW-Luftdruckbremsanlagen, eingesetzt. Vor allem - aber natürlich nicht nur - bei diesem Anwendungsfall besteht das Problem, daß in manchen Fällen, beispielsweise bei ungünstigen Platzverhältnissen bzw. Einbausituationen, vom Monteur beim Stecken nicht sorgfältig genug auf ein korrektes, vollständiges Stecken geachtet wird, so daß in der Praxis Prüfvorgänge eingeschaltet werden müssen, um zu verhindern, daß beim Aufbau des Druckes die Kupplung plötzlich ungewollt getrennt wird.

Aus der EP-B-0 226 689 ist eine gattungsgemäße "Kupplungsvorrichtung" bekannt, bei der zur Vermeidung der beschriebenen Probleme schon im noch nicht ganz korrekt gesteckten Zustand der Kupplungsteile eine "Vorrastung" gewährleistet ist, die es verhindert, daß bei Druckbeaufschlagung die Kupplung ganz getrennt wird. Dabei ist in dieser Vorraststellung eine Undichtigkeit derart gewährleistet, daß dieser Zustand akustisch durch ein Leckgeräusch wahrnehmbar ist, ohne daß es zu einem vollständigen, plötzlichen Druckabfall kommen kann. Die Kupplung kann dann bei Auftreten des Leckgeräusches weiter in die korrekt abgedichtete und arretierte "Vollraststellung" überführt werden. Bei der bekannten Kupplungsvorrichtung ist ein aus im Querschnitt kreisförmigem Federdraht gebogener Verriegelungsring nach Art eines Drahtsprengringes vorgesehen, der in einer ersten Ausführungsform in einer Ausnehmung des Gehäuseteils, dort "Mutterstück" genannt, angeordnet ist und für Vor- und Vollraststellung nacheinander mit zwei separaten, durch zwei ringnutförmige Ausnehmungen des Steckerteils, dort "Gegenstück" genannt, gebildeten Rastkanten zusammenwirkt. In einer zweiten Ausführungsform ist der Verriegelungsring auf dem Stecker (Gegenstück) angeordnet und wirkt mit zwei durch ringnutförmige Aussparungen im Gehäuseteil (Mutterstück) gebildeten Rastkanten zusammen. Die in beiden Ausführungen vorgesehenen jeweils zwei mit dem Verriegelungsring zusammenwirkenden Aussparungen bzw. Rastkanten führen zu einer herstellungsmäßig recht aufwendigen Kontur, zumal zum Überführen von der Vorrastung in die Vollrastung jeweils die eine, erste Aussparung eine "schräge Führungsoberfläche" aufweisen muß.

Aus der EP-B-0 005 856 ist eine weitere, allerdings insofern nicht gattungsgemäße Steckkupplung bekannt, als dabei keine Vorrastung gewährleistet ist. Vielmehr besitzt diese bekannte Kupplung ein innerhalb der Aufnahmeöffnung gelagertes Halteelement, welches in der (ganz) gesteckten und abgedichteten Stellung des Steckerteils eine durch eine Ringnut am Steckerschaft gebildete Rastkante formschlüssig rastend hintergreift. Diese Steckkupplung hat sich in der Praxis gut bewährt, zumal sie dadurch, daß nur ein Halteelement, aber auch nur eine Rastkante bzw. eine Ringnut vorgesehen ist, konstruktiv einfach, preiswert und robust ist und auch eine vorteilhaft kurze Baulänge ermöglicht.

Der vorliegenden Erfindung liegt die Aufgabe zugrunde, ausgehend von dem genannten Stand der Technik eine Steckkupplung zu schaffen, die sich einerseits durch eine hohe Sicherheit im Falle eines fehlerhaften bzw. unkorrekten Steckens, andererseits aber auch durch eine konstruktiv einfache, preiswerte und robuste Ausgestaltung sowie durch eine kurze, kompakte Bauform auszeichnet.

Die Erfindung ist durch die Merkmale des Anspruchs 1 definiert.

Erfindungsgemäß wird die vorzitierte Aufgabe dadurch erfüllt, daß das Halteelement derart ausgebildet ist, daß es sowohl in der Vorraststellung als auch in Vollraststellung jeweils mit der gleichen, einzigen Rastkante zusammenwirkt. Somit wird durch eine spezielle Ausgestaltung des. (einzigen) Halteelementes erreicht, daß auch nur eine (einzige) Rastkante erforderlich ist, die bevorzugt durch eine radiale, ringnutförmige Ausnehmung gebildet ist. Dies führt zu einer einfach und preisgünstig herzustellenden Kontur der Kupplungsteile, die vorzugsweise in etwa den Kupplungsteilen der aus der EP-B-0 005 865 bekannten Kupplung entsprechen. Dennoch werden im Falle eines unkorrekten bzw. unvollständigen Steckens durch eine Vorrastung ein nachfolgendes Lösen und die daraus resultierenden Probleme sicher vermieden. In konstruktiver Hinsicht ist zu diesem Zweck vorzugsweise vorgesehen, daß das Halteelement aus einem in der Ausnehmung des einen Kupplungsteils sitzenden Trägerelement und zwei in dem Trägerelement derart elastisch verformbar und axial hintereinanderliegend gehalterten Rastelementen besteht, daß die Rastkante des anderen Kupplungsteils in der Vorraststellung von dem ersten Rastelement und in der Vollraststellung von dem zweiten Rastelement hintergriffen wird. Das Trägerelement bildet somit eine Art "Aufnahmekäfig" für die Rastelemente, so daß es sich vorteilhafterweise um nur ein einzelnes, vormontiertes Halteelement handelt. Hierdurch ist die Herstellung bzw. Montage der erfindungsgemäßen Steckkupplung sehr einfach. Die "Doppelrastung" wird somit im wesentlichen durch das spezielle Halteelement in Kombination mit sehr einfachen Kupplungsteilen erreicht.

Zweckmäßigerweise sitzt das Trägerelement in radialer und/oder axialer Richtung im wesentlichen ortsfest (formschlüssig) sowie insbesondere bezüglich der Steckkupplungsmittelachse zentiert in der - vozugsweise als Innenringnut innerhalb des Aufnahmeteils ausgebildeten-Ausnehmung, während die beiden Rastelemente unabhängig voneinander relativ zu dem Trägerelement federelastisch in radialer Richtung verformbar sind, um rastend mit der-insbesondere durch eine Außenringnut am Steckerschaft gebildeten - Rastkante zusammenzuwirken. Über das Trägerelement wird auch eine Zentrierung der Rastelemente erreicht, so daß der Steckerschaft stets problemlos einsteckbar ist.

Weitere vorteilhafte Ausgestaltungsmerkmale der Erfindung sind in den Unteransprüchen sowie der folgenden Beschreibung enthalten.

Anhand von mehreren in der Zeichnung dargestellten, bevorzugten Ausführungsbeispielen soll die Erfindung nun genauer erläutert werden. Dabei zeigen:
- Fig. 1: eine erfindungsgemäße Steckkupplung im Axialschnitt, wobei in der linken Figurenhälfte (Fig. 1a) die ganz gesteckte Vollraststellung und in der rechten Figurenhälfte (Fig. 1b) die teilgesteckte Vorraststellung dargestellt sind,
- Fig. 2: eine Seitenansicht einer Einzelkomponente des erfindungsgemäßen Halteelementes,
- Fig. 3: einen Querschnitt in der Schnittebene III-III gemäß Fig. 2 durch das erfindungsgemäße Halteelement in einer ersten Ausführungsform,
- Fig. 4: eine Draufsicht einer weiteren Einzelkomponente, d.h. eines elastischen Rastelementes, des Halteelementes nach Fig. 1 bis 3,
- Fig. 5: einen Schnitt durch das Rastelement in der Ebene V-V gemäß Fig. 4,
- Fig. 6: eine zweite Ausführungsform des erfindungsgemäßen Halteelementes in einer Seiten-Explosionsdarstellung seiner Einzelteile,
- Fig. 7: eine Draufsicht eines Einzelteils in Pfeilrichtung VII gemäß Fig. 6,
- Fig. 8: eine Draufsicht eines weiteren Einzelteils in Pfeilrichtung VIII gemäß Fig. 6,
- Fig. 9: einen vergrößerten Schnitt A-B gemäß Fig. 7,
- Fig. 10: einen vergrößerten Schnitt C-D gemäß Fig. 7,
- Fig. 11: eine weitere Ausführungsform des erfindungsgemäßen Halteelementes im Axialschnitt,
- Fig. 12: einen Querschnitt des Halteelementes in der Ebene XII-XII gemäß Fig. 11,
- Fig. 13: eine weitere Ausführungsform des Halteelementes wiederum im Axialschnitt analog zu Fig. 11,
- Fig. 14: einen Querschnitt in der Ebene XIV-XIV gemäß Fig. 13.

In den verschiedenen Figuren der Zeichnung sind gleiche Teile stets mit den gleichen Bezugszeichen versehen und werden daher in der Regel auch jeweils nur einmal beschrieben.

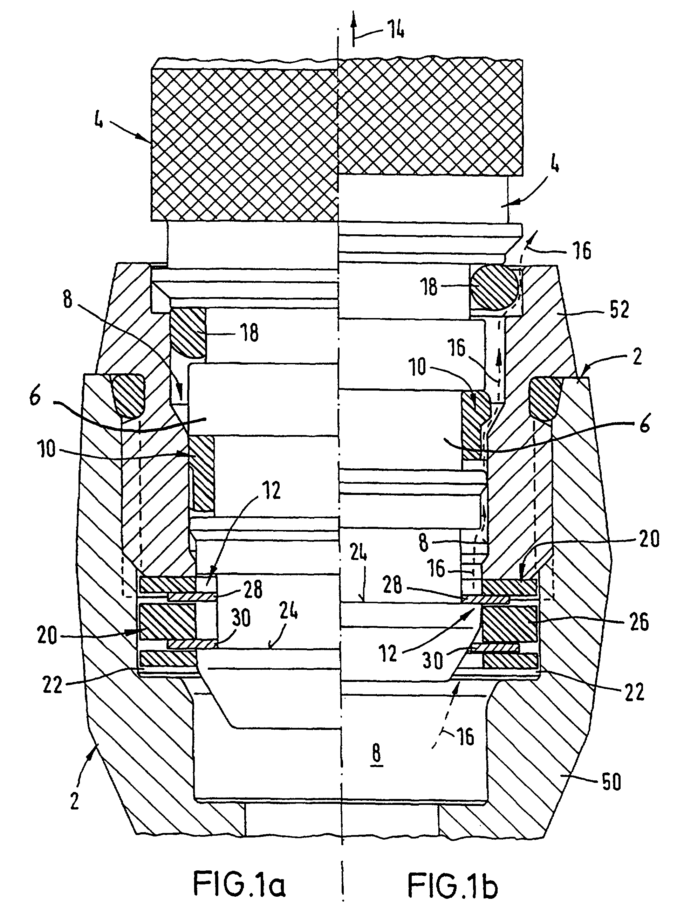

Wie sich aus Fig. 1 ergibt, besteht eine erfindungsgemäße Steckkupplung aus zwei Kupplungsteilen, und zwar einem Aufnahmeteil 2 und einem Steckerteil 4. Das Steckerteil 4 ist mit einem Steckerschaft 6 in eine Aufnahmeöffnung 8 des Aufnahmeteils 2 einsteckbar und hierbei über mindestens eine Umfangsdichtung 10 gegen die Aufnahmeöffnung 8 abgedichtet sowie über eine Verriegelungseinrichtung 12 gegen Lösen (Bewegung in Pfeilrichtung 14 entgegen der Einsteckrichtung) arretierbar. Die Verriegelungseinrichtung 12 ist derart ausgebildet, daß einerseits eine teilgesteckte Vorraststellung (Fig.lb) und andererseits eine ganz gesteckte Vollraststellung (Fig.la) gewährleistet sind. In der bereits gegen Lösen in Pfeilrichtung 14 arretierten Vorraststellung liegt eine derart unvollständige Abdichtung vor, daß im Falle einer Druckbeaufschlagung mit einem Druckmedium, insbesondere Druckluft, ein Signal vorzugsweise in Form eines akustisch wahrnehmbares Leckgeräusches erzeugt wird. Es handelt sich hierbei um eine definiert begrenzte Undichtigkeit bzw. eine durch die Anordnung und/oder Ausbildung der Umfangsdichtung 10 relativ zum Aufnahmeteil 2 bewirkte Bildung eines "Drosselspaltes", wodurch das Druckmedium entsprechend der gestrichelten Pfeile 16 dosiert ausströmt und dabei das Leckgeräusch insbesondere als Pfeifen, Zischen oder dergleichen, erzeugt. Dies kann dann als Signal dafür gewertet werden, daß noch nicht die korrekt gesteckte Vollraststellung erreicht ist, so daß in diesem Fall ausgehend von der Vorraststellung die Steckkupplung durch weitergehendes Stecken in die Vollraststellung überführt werden kann.

In der Vorraststellung nach Fig. 1b kann mit Vorteil vorgesehen sein, daß die Umfangsdichtung 10 bereits in mehreren umfänglich verteilten Anlagenstellen am anderen Kupplungsteil, wie dargestellt bevorzugt in der Aufnahmeöffnung 8 des Aufnahmeteils 2, anliegt. Zwischen den Anlagestellen sind jeweils axiale Leckagepfade gebildet. Durch diese Ausgestaltung wird vermieden, daß die Umfangsdichtung 10 strömungsbedingt "ausgewaschen" werden könnte. Die Anlagestellen können - wie dargestellt - durch spezielle Ausgestaltung der Umfangsdichtung 10 und/oder in einer nicht dargestellten Ausführung durch besondere Ausgestaltung des Innenumfangs der Aufnahmeöffnung 8 gebildet werden. Diesbezüglich sind unterschiedliche Ausgestaltungsmerkmale bereits in der älteren, nicht vorveröffentlichten deutschen Patentanmeldung 195 36 333.7 vom 29.09.1995 der Anmelderin enthalten, auf die an dieser Stelle in vollem Umfange Bezug genommen wird.

Zusätzlich zu der Umfangsdichtung 10 kann - wie dargestellt - eine weitere Dichtung 18 insbesondere im Mündungsbereich der Aufnahmeöffnung 8 vorgesehen sein, die zum Abdichten gegen Eindringen von Schmutz, Staub, Feuchtigkeit und dergleichen dient.

Die Verriegelungseinrichtung 12 weist ein Halteelement 20 auf, welches in einer Ausnehmung 22 des einen Kupplungsteils - wie dargestellt bevorzugt des Aufnahmeteils 2 - sitzt und in der Vorraststellung bzw. in der Vollraststellung jeweils eine Rastkante 24 des anderen Kupplungsteils - wie dargestellt vorzugsweise des Steckerteils 4 - rastend formschlüssig hintergreift. Im dargestellten, bevorzugten Ausführungsbeispiel wird die Ausnehmung 22 durch eine Innenringnut innerhalb der Aufnahemöffnung 8 gebildet, während die Rastkante 24 eine einseitige Begrenzung einer Außenringnut am Steckerschaft 6 bildet.

Es liegt jedoch ebenfalls im Bereich der Erfindung, dies umgekehrt vorzusehen, d.h. das Halteelement 20 in einer Ausnehmung bzw. Außenringnut am Steckerschaft 6 zu lagern und die Rastkante 24 innerhalb der Aufnahmeöffnung 8 zu bilden.

Erfindungsgemäß ist nun das Halteelement 20 derart ausgebildet, daß es sowohl in der Vorraststellung (Fig. 1b) als auch in der Vollraststellung (Fig. 1a) jeweils mit derselben, einzigen Rastkante 24 zusammenwirkt. Dies bedeutet, daß das Halteelement 20 sowohl die Vorraststellung als auch die Vollraststellung definiert, obwohl nur eine einzige Rastkante 24 vorhanden ist.

Konstruktiv wird dies bevorzugt dadurch erreicht, daß das Halteelement 20 aus einem käfigartigen Trägerelement 26 und zwei in dem Trägerelement 26 derart axialbenachbart hintereinander sowie elastisch verformbar gehalterten Rastelementen 28,30 besteht, daß die Rastkante 24 in der Vorraststellung gemäß Fig. 1b von dem ersten Rastelement 28 und in der Vollraststellung gemäß Fig. 1a von dem zweiten Rastelement 30 hintergriffen wird. Dabei sitzt das Trägerelement 26 bevorzugt innerhalb der als Innenringnut ausgebildeten Ausnehmung 22 in der Aufnahmeöffnung 8.

Das Trägerelement 26 ist bevorzugt als Ringkörper mit zwei Aufnahmeräumen 32 für die Rastelemente 28,30 ausgebildet.

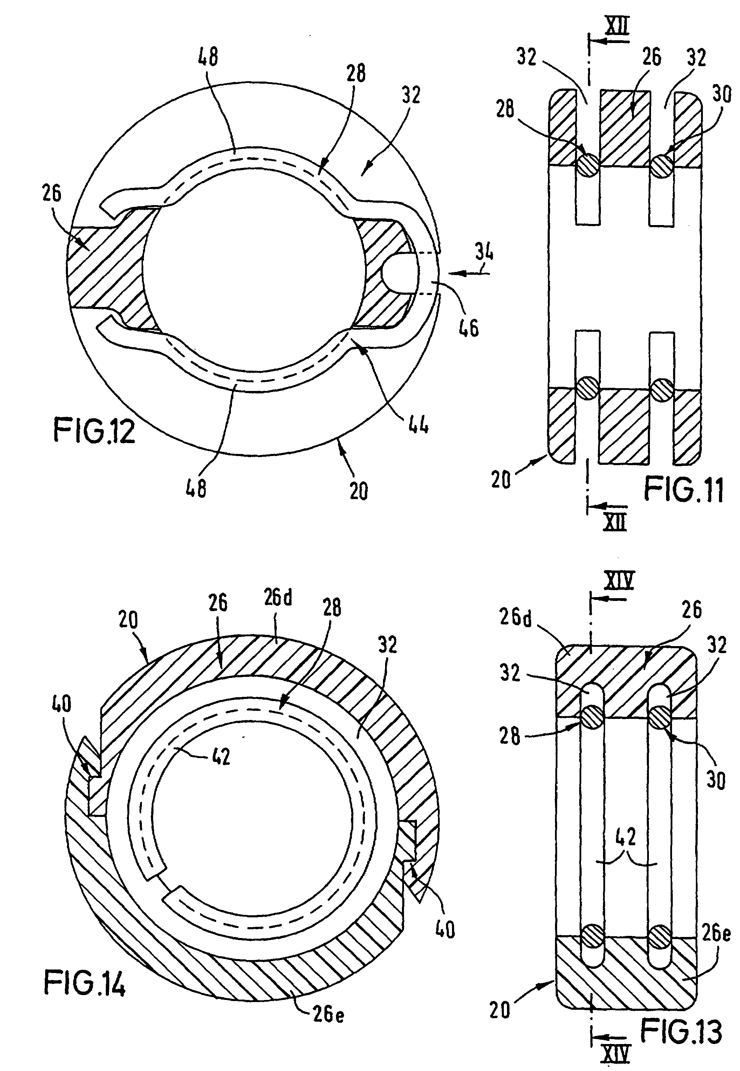

Gemäß Fig. 1 bis 3 sowie 11 und 12 können die Aufnahmeräume 32 als querschlitzartige Ausnehmungen gebildet sein. In der Ausführung nach Fig. 13 und 14 handelt es sich bei den Aufnahmeräumen 32 um innere Ringnuten.

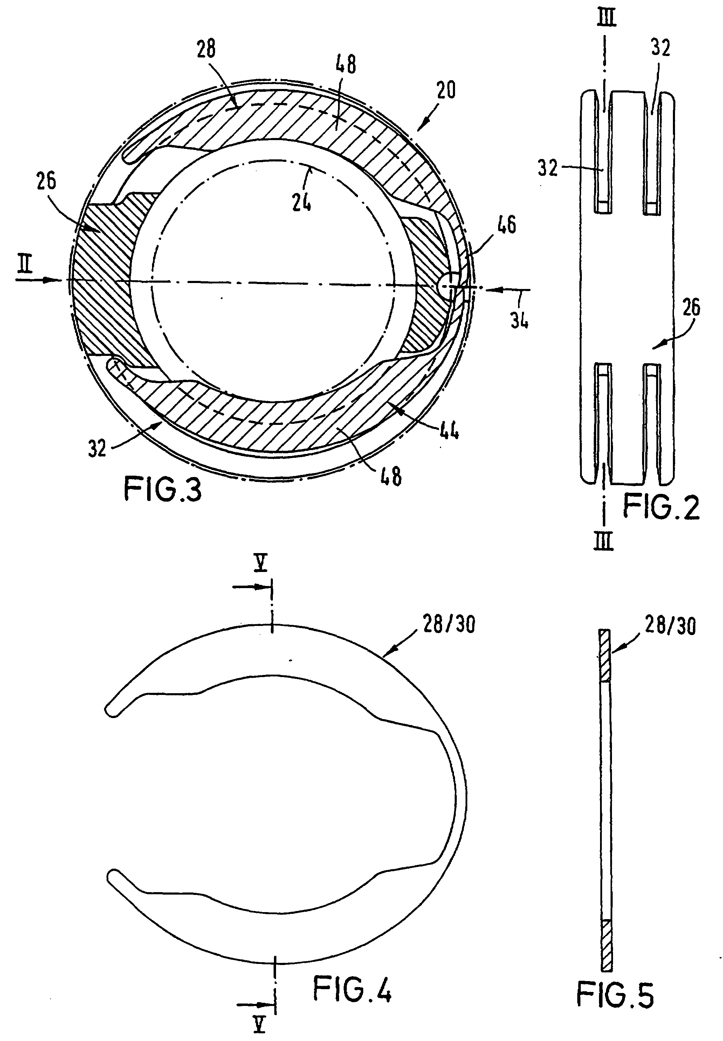

Es ist besonders vorteilhaft, wenn das Trägerelement 26 als einstückiges oder mehrteiliges Formteil insbesondere aus Kunststoff gebildet ist. Hierbei können die Rastelemente 28,30 und die diese aufnehmenden Aufnahmeräume 32 derart ausgebildet sein, daß die Rastelemente 28,30 von außen quer zur Mittelachse des Trägerelementes 26 bzw. des Ringkörpers in die Aufnahmeräume 32 einschiebbar sind (vgl. hierzu die in Fig. 3 und 12 jeweils eingezeichneten Pfeile 34). In der Ausführung nach Fig. 13 und 14 handelt es sich bei den Rastelementen 28,30 jeweils um geschlitzte Federringe, die aufgrund einer Unterbrechung ihres Ringumfanges so zusammendrückbar und dadurch im Durchmesser reduzierbar sind, daß sie hierdurch in axialer Richtung in die als Ringnuten gebildeten Aufnahmeräume 32 einsetzbar sind.

In den Ausführungen des Halteelementes 20 nach Fig. 2 und 3 sowie Fig. 11 und 12 handelt es sich bei dem Trägerelement 26 jeweils um ein einstückiges Formteil.

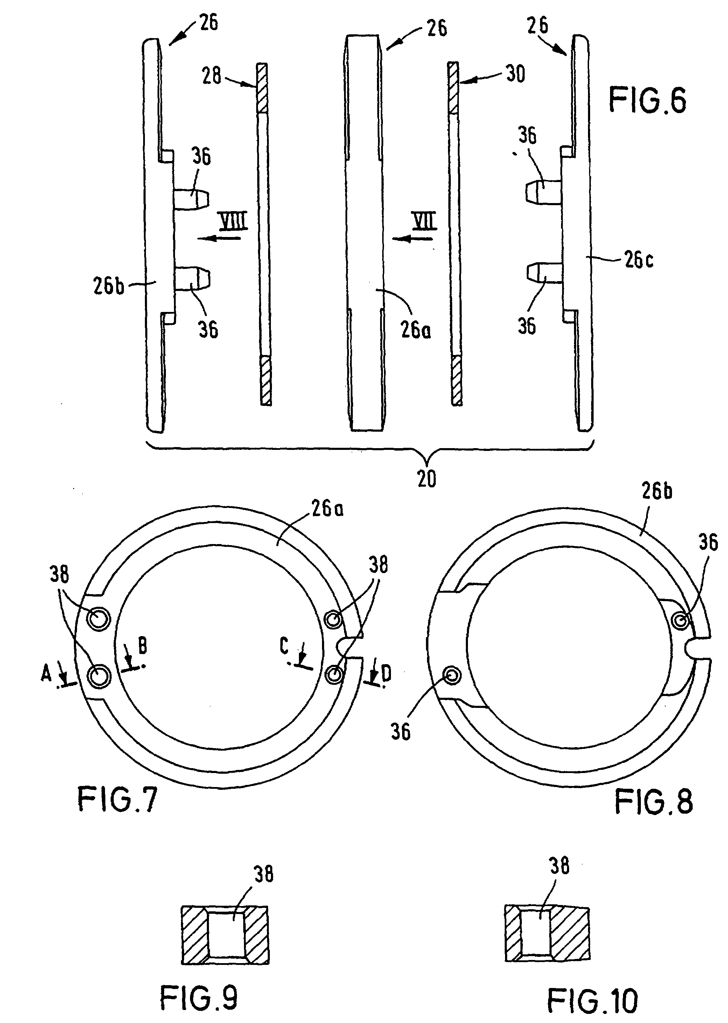

Alternativ hierzu ist in den Fig. 6 bis 10 eine vorteilhafte Ausführungsform des Halteelementes 20 veranschaulicht, bei dem das Trägerelement 26 aus drei in axialer Richtung geteilten, insbesondere jeweils ringförmigen Trägerteilen 26a,b,c besteht, und zwar aus einem Mittelteil 26a und zwei Seitenteilen 26b,c, die "sandwichartig" jeweils unter Zwischenlage eines der Rastelemente 28,30 miteinander verbunden sind. Für diese insbesondere lösbare Verbindung ist bevorzugt eine Steck- und/oder Rastverbindung vorgesehen.

Im dargestellten Ausführungsbeispiel greifen die Seitenteile 26b,c jeweils mit Steckzapfen 36 in axialer Richtung in entsprechende Stecköffnungen 38 des Mittelteils 26a ein. Hierbei kann vorteilhafterweise durch eine besondere Anordnung und/oder durch eine besondere Querschnittsform der Steckzapfen 36 und der Stecköffnungen 38 eine definierte Zuordnung derart erreicht werden, daß die Einzelteile 26a, b,c nur in einer definierten relativen Zuordnung zueinander miteinander verbindbar sind. Im dargestellten Beispiel sind bezüglich des Durchmessers unterschiedliche große Stecköffnungen 38 vorgesehen, an die die Steckzapfen 36 entsprechend angepaßt sind.

In der hierzu alternativen Ausführung nach Fig. 13 und 14 besteht das Trägerelement 26 aus zwei in Umfangsrichtung geteilten, vorzugsweise jeweils im wesentlichen halbringförmigen Trägerteilen 26d,e. Auch hierbei sind die Trägerteile 26d,e unter Einschluß der Rastelemente 28, 30 miteinander verbunden, und zwar wiederum insbesondere lösbar, bevorzugt über mindestens eine Rastverbindung (schnappbare Form- oder Kraftformschlußverbindung 40).

In allen Ausführungsformen weist das Trägerelement 26 zumindest auf seiner der Rastkante 24 radial zugekehrten Seite insbesondere zwei diametral gegenüberliegend angeordnete, schlitzartige Öffnungen auf, die bereichsweise von den Rastelementen 28,30 zum Hintergreifen der Rastkante 24 durchgriffen werden.

Was nun die Rastelemente 28,30 betrifft, so bestehen diese aus Kunststoff oder Metall, insbesondere aus Federstahl. Wie bereits kurz erwähnt, sind die Rastelemente 28,30 in der Ausführung nach Fig. 13 und 14 von geschlitzten Federringen 42 insbesondere aus im Querschnitt kreisförmigem Federdraht gebildet. Es handelt sich somit um eine Art Sprengringe. Diese Ausführung zeichnet sich durch eine sehr einfache Montage, kompakte Bauform und in der speziellen Ausgestaltung nach Fig. 13 und 14 auch durch einfaches Lösen aus durch Öffnen des Käfigs und anschließendes Abnehmen der Rastelemente 28,30.

In den übrigen dargestellten Ausführungsbeispielen sind die Rastelemente 28,30 jeweils als Federklammern 44 mit zwei über einen - praktisch eine Art Federgelenk bildenden - Verbindungsabschnitt 46 einstückig verbundenen Federarmen 48 ausgebildet. Hierzu wird insbesondere auf Fig. 3 und 4 sowie Fig. 12 hingewiesen. In den Ausführungen nach Fig.1 bis 6 sind hierbei die Federklammern 44 als Stanzteile aus relativ dünnem Federblech gebildet. Hieraus resultiert eine besonders günstige, kurze Baulänge trotz der beiden Raststellungen. In der Ausführung nach Fig. 11 und 12 bestehen die Federklammern 44 aus im Querschnitt vorzugsweise kreisförmigem Federdraht. Hierbei ist von Vorteil, daß die Federklammern 44 auf einfache Weise innerhalb des Trägerelementes 26 zentriert werden können. Zudem ergibt sich eine einfache Lösbarkeit durch seitliches Wegziehen (entgegen der Pfeilrichtung 34). Auch hierbei wird eine sehr kompakte Bauform erreicht.

Es sei an dieser Stelle darauf hingewiesen, daß für die erfindungsgemäße vorgesehenen jeweils zwei Rastelemente 28,30 natürlich auch eine beliebige Kombination unterschiedlicher Federringe bzw. Federklammern verwendet werden kann.

Zweckmäßigerweise sind die Federklammern 44 im Bereich ihrer mit der Rastkante 24 zusammenwirkenden Federarme 48 an die Umfangskontur des die Rastkante 24 aufweisenden Kupplungsteils, bevorzugt des Steckerschaftes 6, angepaßt. Es ergibt sich hierdurch eine etwa kreisbogenförmige Ausgestaltung des Rastbereichs der Federarme 48.

In Fig. 3 ist das Rastelement 28 bzw. die Federklammer 44 in der unteren Figurenhälfte in ihrer "geschlossenen" Arretierposition und in der oberen Figurenhälfte in der "geöffneten" Position beim Steckvorgang dargestellt. Dabei ist die Rastkante 24 durch eine kreisförmige Strichpunktlinie angedeutet.

Um eine Lösbarkeit der Steckverbindung zu erreichen, ist gemäß Fig. 1 bevorzugt vorgesehen, daß das Aufnahmeteil 2 aus zwei lösbar miteinander verbundenen Teilen, und zwar einem Basisteil 50 und einem Einsatzteil 52, besteht, wobei diese beiden Teile 50,52 zwischen sich die das Halteelement 20 aufnehmende Ausnehmung 22 begrenzen. Auf diese Weise läßt sich der in einer der beiden Raststellungen verrastete Steckerschaft 6 entgegen der Pfeilrichtung 14 entnehmen, nachdem das Einsatzteil 52 vom Basisteil 50 gelöst wurde.

In der oben bereits erwähnten, jedoch zeichnerisch nicht dargestellten Alternative, wenn das Halteelement 20 am Steckerschaft 6 gelagert ist, würde hierbei zur Lösbarkeit das Einsatzteil 52 die mit dem Halteelement 20 zusammenwirkende Rastkante 24 bilden. Ein Lösen wäre dann analog möglich.

## Patentansprüche

1. Steckkupplung für Druckmittelsysteme, bestehend aus zwei Kupplungsteilen, und zwar einem Aufnahmeteil (2) und einem Steckerteil (4), wobei das Steckerteil (4) mit einem Steckerschaft (6) umfangsgemäß abgedichtet in eine Aufnahmeöffnung (8) des Aufnahmeteils (2) einsteckbar und über eine Verriegelungseinrichtung (12) gegen Lösen arretierbar ist, wobei die Verriegelungseinrichtung (12) derart ausgebildet ist, daß eine teilgesteckte Vorraststellung (Fig. 1b) und eine ganz gesteckte Vollraststellung (Fig. 1a) gewährleistet sind, wobei in der Vorraststellung eine derart unvollständige Abdichtung vorliegt,daß im Falle einer Druckbeaufschlagung mit einem Druckmedium ein Signal, insbesondere ein akustisch wahrnehmbares Leckgeräusch, erzeugt wird, und wobei in der Vollraststellung eine vollständige, druckdichte Abdichtung vorliegt, wobei die Verriegelungseinrichtung (12) ein in einer Ausnehmung (22) des einen Kupplungsteils (2) sitzendes Halteelement (20) aufweist, welches in der Vorraststellung und in der Vollraststellung jeweils eine Rastkante (24) des anderen Kupplungsteils (4) rastend hintergreift,
**dadurch gekennzeichnet, daß** das Halteelement (20) aus einem in der Ausnehmung (22) des einen Kupplungsteils (2) sitzenden Trägerelement (26) und zwei in dem Trägerelement (26) derart elastisch verformbar gehalterten und derart axial hintereinander angeordneten Rastelementen (28, 30) besteht, daß das Halteelement (20) sowohl in der Vorraststellung (Fig. 1b) als auch in der Vollraststellung (Fig. 1a) jeweils mit der gleichen, einzigen Rastkante (24) des anderen Kupplungsteils (4) zusammenwirkt, indem die Rastkante (24) in der Vorraststellung (Fig. 1b) von dem ersten Rastelement (28) und in der Vollraststellung (Fig. 1a) von dem zweiten Rastelement (30) hintergriffen wird.

2. Steckkupplung nach Anspruch 1,
**dadurch gekennzeichnet, daß** das Trägerelement (26) als Ringkörper mit zwei insbesondere schlitzartigen Aufnahmeräumen (32) für die Rastelemente (28,30) ausgebildet ist.

3. Steckkupplung nach Anspruch 1 oder 2,
**dadurch gekennzeichnet, daß** das Trägerelement (26) als einstückiges Formteil insbesondere aus Kunststoff gebildet ist, wobei die Rastelemente (28,30) und die Aufnahmeräume (32) derart ausgebildet sind, daß die Rastelemente (28,30) quer zur Ringkörperachse in die Aufnahmeräume (32) einschiebbar sind.

4. Steckkupplung nach Anspruch 1 oder 2,
**dadurch gekennzeichnet, daß** das Trägerelement (26) aus drei in axialer Richtung geteilten Trägerteilen (26a,b,c) besteht, und zwar aus einem Mittelteil (26a) und zwei Seitenteilen (26b,c), die sandwichartig jeweils unter Zwischenlage eines der Rastelemente (28,30) miteinander verbunden sind, und zwar insbesondere lösbar, bevorzugt über eine Steck- und/oder Rastverbindung (36,38).

5. Steckkupplung nach Anspruch 1 oder 2,
**dadurch gekennzeichnet, daß** das Trägerelement (26) aus zwei in Umfangsrichtung geteilten Trägerteilen (26d,e) besteht, die unter Einschluß der Rastelemente (28,30) miteinander verbunden sind, und zwar insbesondere lösbar, bevorzugt über eine Rastverbindung (40).

6. Steckkupplung nach einem der Ansprüche 1 bis 5,
**dadurch gekennzeichnet, daß** das Trägerelement (26) auf seiner der Rastkante (24) radial zugekehrten Seite schlitzartige Öffnungen aufweist, die bereichsweise von den Rastelementen (28,30) zum Hintergreifen der Rastkante (24) durchgriffen werden.

7. Steckkupplung nach einem der Ansprüche 1 bis 6,
**dadurch gekennzeichnet, daß** die Rastelemente (28,30) aus Kunststoff oder Metall, insbesondere aus Federstahl bestehen.

8. Steckkupplung nach einem der Ansprüche 1 bis 7,
**dadurch gekennzeichnet, daß** die Rastelemente (28,30) von geschlitzten Federringen (42) insbesondere aus im Querschnitt kreisförmigem Draht gebildet sind.

9. Steckkupplung nach einem der Ansprüche 1 bis 7,
**dadurch gekennzeichnet, daß** die Rastelemente (28,30) als Federklammern (44) mit zwei über einen Verbindungsabschnitt (46) verbundenen Federarmen (48) ausgebildet sind.

10. Steckkupplung nach Anspruch 9,
**dadurch gekennzeichnet, daß** die Federklammern (44) aus im Querschnitt kreisförmigem Draht bestehen.

11. Steckkupplung nach Anspruch 9,
**dadurch gekennzeichnet, daß** die Federklammern (44) als Stanzteile aus Blech gebildet sind.

12. Steckkupplung nach einem der Ansprüche 9 bis 11,
**dadurch gekennzeichnet, daß** die Federklammem (44) im Bereich ihrer mit der Rastkante (24) zusammenwirkenden Federarme (48) an die Umfangskontur des die Rastkante (24) ausweisenden Kupplungsteils (4) angepaßt sind.

13. Steckkupplung nach einem der Ansprüche 1 bis 12,
**dadurch gekennzeichnet, daß** das Halteelement (20) in der insbesondere als Innenringnut innerhalb der Aufnahmeöffnung (8) des Aufnahmeteils (2) gebildeten Ausnehmung (22) sitzt und die Rastkante (24) an dem Steckerschaft (6), insbesondere als einseitige Begrenzungskante einer am Steckerschaft (6) gebildeten Außenringnut, gebildet ist.

14. Steckkupplung nach einem der Ansprüche 1 bis 13,
**dadurch gekennzeichnet, daß** das Aufnahmeteil (2) aus zwei lösbar miteinander verbundenen Teilen (50,52) besteht, die zwischen sich die das Halteelement (20) aufnehmende Ausnehmung (22) begrenzen.

15. Steckkupplung nach einem der Ansprüche 1 bis 12,
**dadurch gekennzeichnet, daß** das Halteelement (20)-insbesondere in einer Außenringnut - am Steckerschaft (6) sitzt und die Rastkante (24) in der Aufnahmeöffnung (8) des Aufnahmeteils (2) gebildet ist

16. Steckkupplung nach einem der Ansprüche 1 bis 12 und/oder nach Anspruch 15,
**dadurch gekennzeichnet, daß** das Aufnahmeteil (2) aus zwei lösbar miteinander verbundenen Teilen (50,52) besteht, wobei das eine Teil (52) die mit dem am Steckerschaft (6) gelagerten Halteelement (20) zusammenwirkende Rastkante (24) aufweist.

## Claims

1. Plug-in coupling for pressure medium systems, comprising two coupling parts, to be precise a retaining part (2) and a plug part (4), in which case a plug shank (6) of the plug part (4) can be inserted into a retaining opening (8) in the retaining part (2) such that it is sealed around the circumference, and can be locked against becoming loose via a locking device (12), with the locking device (12) being designed in such a manner that a partially inserted initially latched position (Figure 1b) and an entirely inserted fully latched position (Figure 1a) are ensured, in which case, in the initially latched position, an incomplete seal is produced in such a manner that, if pressure is applied by a pressure medium, a signal, in particular an audibly perceptible leakage noise, is produced, and in which case, in the fully latched position, a complete pressure-tight seal is produced, in which case the locking device (12) has a holding element (20) which is seated in a recess (22) in the one coupling part (2) and, in the initially latched position and in the fully latched position, in each case engages in a latching manner behind a latching edge (24) on the other coupling part (4), **characterized in that** the holding element (20) comprises a base element (26), which is seated in the recess (22) in the one coupling part (2), and two latching elements (28, 30), which are held in an elastically deformable manner in the base element (26), and are arranged axially one behind the other, in such a manner that the holding element (20) in each case interacts with the same, single latching edge (24) on the other coupling part (4) in both the initially latched position (Figure 1b) and in the fully latched position (Figure 1a), **in that**, in the initially latched position (Figure 1b), the first latching element (28) engages behind the latching edge (24) and, in the fully latched position (Figure 1a), the second latching element (30) engages behind the latching edge (24).

2. Plug-in coupling according to Claim 1,
**characterized in that** the base element (26) is in the form of an annular body having two retaining spaces (32), which are, in particular, like slots, for the latching elements (28, 30).

3. Plug-in coupling according to Claim 1 or 2,
**characterized in that** the base element (26) is in the form of an integral moulding, in particular composed of plastic, with the latching elements (28, 30) and the retaining spaces (32) being designed in such a manner that the latching elements (28, 30) can be pushed into the retaining spaces (32) transversely with respect to the annular body axis.

4. Plug-in coupling according to Claim 1 or 2,
**characterized in that** the base element (26) comprises three base parts (26a,b,c) which are split in the axial direction, to be precise a centre part (26a) and two side parts (26b,c), which are each connected to one another like a sandwich with the interposition of one of the latching elements (28, 30), to be precise in particular detachably, preferably via a plug-in and/or latching connection (36, 38).

5. Plug-in coupling according to Claim 1 or 2,
**characterized in that** the base element (26) comprises two base parts (26d,e) which are split in the circumferential direction and are connected to one another with the inclusion of the latching elements (28, 30), to be precise in particular detachably, and preferably via a latching connection (40).

6. Plug-in coupling according to one of Claims 1 to 5,
**characterized in that** the base element (26) has slot-like openings on its side which radially faces the latching edge (24), through which openings the latching elements (28, 30) pass in places in order to engage behind the latching edge (24).

7. Plug-in coupling according to one of Claims 1 to 6,
**characterized in that** the latching elements (28, 30) are composed of plastic or metal, in particular of spring steel.

8. Plug-in coupling according to one of Claims 1 to 7,
**characterized in that** the latching elements (28, 30) are formed by slotted spring rings (42), in particular from wire with a circular cross section.

9. Plug-in coupling according to one of Claims 1 to 7,
**characterized in that** the latching elements (28, 30) are in the form of spring brackets (44) having two spring arms (48) which are connected via a connecting section (46).

10. Plug-in coupling according to Claim 9,
**characterized in that** the spring brackets (44) are composed of wire with a circular cross section.

11. Plug-in coupling according to Claim 9,
**characterized in that** the spring brackets (44) are formed as stamped parts from sheet metal.

12. Plug-in coupling according to one of Claims 9 to 11,
**characterized in that**, in the region of their spring arms (48) which interact with the latching edge (24), the spring brackets (44) are matched to the circumferential contour of the coupling part (4) which has the latching edge (24).

13. Plug-in coupling according to one of Claims 1 to 12,
**characterized in that** the holding element (20) is seated in the recess (22) which is formed in particular as an internal annular groove within the retaining opening (8) in the retaining part (2), and the latching edge (24) is formed on the plug shank (6), in particular as boundary edge on one side of an external annular groove which is formed on the plug shank (6).

14. Plug-in coupling according to one of Claims 1 to 13,
**characterized in that** the retaining part (2) comprises two parts (50, 52), which are detachably connected to one another and which, between them, bound the recess (22) which holds the holding element (20).

15. Plug-in coupling according to one of Claims 1 to 12,
**characterized in that** the holding element (20) is seated - in particular in an external annular groove-on the plug shank (6), and the latching edge (24) is formed in the retaining opening (8) in the retaining part (2).

16. Plug-in coupling according to one of Claims 1 to 12 and/or according to Claim 15,
**characterized in that** the retaining part (2) comprises two parts (50, 52) which are detachably connected to one another, with the one part (52) having the latching edge (24) which interacts with the holding element (20) that is mounted on the plug shank (6).

## Revendications

1. Connecteur à fiche pour systèmes à agents de pression, constitué de deux pièces d'accouplement, à savoir d'un logement (2) et d'une fiche (4), la fiche (4) étant enfichable moyennant un fût d'accouplement (6) et d'une manière étanche sur la périphérie dans une ouverture (8) de réception du logement (2) et pouvant être bloquée contre le desserrage moyennant un dispositif de verrouillage (12), le dispositif de verrouillage (12) étant constitué tel qu'une position partiellement enfichée de pré-blocage (figure 1b) et une position totalement enfichée de blocage (figure 1a) complet étant assurées, la position de pré-blocage présentant une étanchéité incomplète telle qu'en cas d'une exécution de pression moyennant un agent de pression, un signal, notamment un bruit de fuite acoustiquement perceptible est généré et la position de blocage complet présentant une étanchéité complète, étanche par pression, le dispositif de verrouillage (12) présentant un élément de soutien (20) se trouvant dans un creux (22) d'une des pièces d'accouplement (2), lequel élément de soutien s'engage, dans la position de pré-blocage et dans la position de blocage complet, en arrêt derrière l'arête de blocage (24) de l'autre pièce d'accouplement (4),
**caractérisé en ce que** l'élément de soutien (20) consiste en un élément de support (26) se trouvant dans le creux (22) de l'une des pièces d'accouplement (2) et de deux éléments d'arrêts (28, 30) maintenus élastiquement déformables dans un élément de support (26) et disposés axialement successivement tel que l'élément de soutien (20) coopère, et dans la position de pré-blocage (figure 1b) et dans la position de blocage complet (figure 1a) respectivement avec la même et unique arête de blocage (24) de l'autre pièce d'accouplement (4), le premier élément de blocage (28) s'engageant derrière l'arête de blocage (24) dans la position de pré-blocage (figure 1b) et le deuxième élément de blocage (30) dans la position de blocage complet (figure 1a).

2. Connecteur à fiche selon la revendication 1,
**caractérisé en ce que** l'élément de support (26) est constitué en tant que corps annulaire à deux espaces de logement (32) notamment fendus pour les éléments de blocage (28, 30).

3. Connecteur à fiche selon la revendication 1 ou 2,
**caractérisé en ce que** l'élément de support (26) est constitué en tant que pièce usinée en une seule pièce, notamment en matière plastique, les éléments de blocage (28, 30) et les espaces de logement (32) étant formés tels que les éléments de blocage (28, 30) peuvent être insérés dans les espaces de logement (32) en direction transversale à l'axe du corps annulaire.

4. Connecteur à fiche selon la revendication 1 ou 2,
**caractérisé en ce que** l'élément de support (26) est constitué de trois pièces de support (26a, b, c) séparées en direction axiale, à savoir d'une pièce centrale (26a) et de deux pièces latérales (26b, c) reliées entre elles en intercalant un élément de blocage (28, 30), à savoir notamment d'une manière desserrable, préférentiellement par une jonction à fiche et / ou de blocage (36, 38).

5. Connecteur à fiche selon la revendication 1 ou 2,
**caractérisé en ce que** l'élément de support (26) est constitué de deux pièces de support (26d, e) séparées dans le sens de la circonférence et reliées entre elles en incluant les éléments de blocage (28, 30), à savoir notamment d'une manière desserrable, préférentiellement via une connexion encliquetable (40).

6. Connecteur à fiche selon la revendication 1 à 5,
**caractérisé en ce que** l'élément de support (26) présente, sur sa face orientée radialement à l'arête de blocage (24), des ouvertures sous forme de fentes, par lesquelles passent en partie les éléments de blocage (28, 30) pour s'engager derrière l'arête de blocage (24).

7. Connecteur à fiche selon la revendication 1 à 6,
**caractérisé en ce que** les éléments de blocage (28, 30) sont constitués de matière plastique ou de métal, notamment d'acier à ressorts.

8. Connecteur à fiche selon la revendication 1 à 7,
**caractérisé en ce que** les éléments de blocage (28, 30) sont constitués de joncs fendus et élastiques (42), notamment de fil à section circulaire.

9. Connecteur à fiche selon la revendication 1 à 7,
**caractérisé en ce que** les éléments de blocage (28, 30) sont constitués sous forme de pinces à ressort (44) avec deux bras élastiques (48) reliés à travers une section de jonction (46).

10. Connecteur à fiche selon la revendication 9,
**caractérisé en ce que** les pinces à ressort (44) consistent en un fil à section circulaire.

11. Connecteur à fiche selon la revendication 9,
**caractérisé en ce que** les pinces à ressort (44) sont constituées sous forme de pièces poinçonnées en tôle.

12. Connecteur à fiche selon la revendication 9 à 11,
**caractérisé en ce que** les pinces à ressort (44) sont, dans la partie des bras élastiques (48) coopérant avec l'arête de blocage (24), ajustées au contour périphérique de la pièce d'accouplement (4) présentant l'arête de blocage (24).

13. Connecteur à fiche selon la revendication 1 à 12,
**caractérisé en ce que** l'élément de support (20) se trouve dans le creux (22) formé notamment en tant que rainure annulaire intérieure dans l'ouverture de réception (8) du logement (2) et que l'arête de blocage (24) est constitué au fût (6) de la fiche, notamment en tant que l'arête de limite unilatérale d'une rainure annulaire extérieure formée au fût (6) de la fiche.

14. Connecteur à fiche, selon la revendication 1 à 13,
**caractérisé en ce que** le logement (2) est constitué de deux pièces (50, 52) reliées d'une manière desserrable entre elles et qui bornent entre elles le creux (22) recevant l'élément de support (20).

15. Connecteur à fiche, selon la revendication 1 à 12,
**caractérisé en ce que** l'élément de support (20) se trouve - notamment dans une rainure annulaire extérieure - au fût (6) de la fiche et que l'arête de blocage (24) est constituée dans l'ouverture de réception (8) du logement (2).

16. Connecteur à fiche selon la revendication 1 à 12 et/ou la revendication 15,
**caractérisé en ce que** le logement (2) est constitué de deux pièces (50, 52) reliées entre elles d'une manière desserrable, l'une des pièces (52) présentant l'arête de blocage (24) coopérant avec l'élément de support (20) se trouvant au fût (6) de la fiche.
